# EUROPÄISCHE PATENTSCHRIFT

(11) **EP 3 895 920 B1**
(45) Veröffentlichungstag und Bekanntmachung des Hinweises auf die Patenterteilung: **07.06.2023**
(21) Anmeldenummer: 21167126.8
(22) Anmeldetag: 07.04.2021
(51) Int. Cl.: B60H 1/00, B60H 1/24, B60H 1/03

(54) **HEIZ- UND/ODER KLIMAANLAGE MIT VERBESSERTER BELÜFTUNG FÜR EIN BODENGEBUNDENES FAHRZEUG**
HEATING AND / OR AIR CONDITIONING SYSTEM WITH IMPROVED VENTILATION FOR A GROUND VEHICLE
INSTALLATION DE CHAUFFAGE ET/OU DE CLIMATISATION À AÉRATION AMÉLIORÉE POUR VÉHICULES TERRESTRES

(30) Priorität: 18.04.2020 DE 102020110600
(43) Veröffentlichungstag der Anmeldung: 20.10.2021
(73) Patentinhaber: Konvekta Aktiengesellschaft, 34613 Schwalmstadt-Ziegenhain (DE)
(72) Erfinder: Sonnekalb, Michael, 34613 Schwalmstadt (DE)
(74) Vertreter: Lindinger, Bernhard

(56) Entgegenhaltungen:
- JP-A- 2010 076 506
- JP-A- 2012 171 522
- JP-A- 2015 051 680
- US-A1- 2005 230 096

## Beschreibung

### Gebiet der Technik:

Die Erfindung betrifft eine Heiz- und/oder Klimaanlage für ein bodengebundenes Fahrzeug gemäß dem Oberbegriff des Anspruchs 1. Die Heiz- und/oder Klimaanlage umfasst wenigstens ein Umluftgebläse zum Fördern von Umluft bezüglich eines Fahrzeuginnenraums und wenigstens ein Frischluftgebläse zum nur Fördern von Frischluft für einen Fahrzeuginnenraum sowie zumindest auch eine Abluftfördereinrichtung zum Fördern von Abluft aus einem Fahrzeuginnenraum nach außen in die Umgebung. Diese Heiz- und/oder Klimaanlagen werden insbesondere bei Bau- und Landwirtschaftsfahrzeugen verwendet. Ferner betrifft die Erfindung ein bodengebundenes Fahrzeug, also ein zur Fortbewegung auf dem Boden vorgesehenes Fahrzeug, wie beispielsweise ein Straßen-, Land- oder Schienenfahrzeug, mit derartiger Heiz- und/oder Klimaanlage sowie ein Verfahren zum Steuern dieser Anlage.

### Stand der Technik:

Eine Klimaanlage für bodengebundene Fahrzeuge umfasst üblicherweise einen Kältemittelkreis mit Verdichter, Kondensator/Gaskühler, Expansionsorgan und Verdampfer mit Kältemittelleitungen zu einem Kreislauf verbunden. Ein Kondensator/Gaskühler ist entweder ein Kondensator oder ein Gaskühler. Bei einer Heizanlage für bodengebundene Fahrzeuge wird oft ein Heizkreislauf mit einem erwärmbaren Heizmedium zum Heizen der Luft eines Fahrzeuginnenraums mittels Wärmetauscher eingesetzt, aber auch die Verwendung von elektrisch betreibbaren Heizeinrichtungen ist verbreitet. Außerdem sind Heiz- und Klimaanlagen mit einem Kältemittelkreislauf einerseits im Wärmepumpenbetrieb zum Heizen und andererseits umgeschaltet im Klimabetrieb zum Kühlen des Fahrzeuginnenraums eines bodengebundenen Fahrzeugs bekannt. Bei diesen Heiz- und/oder Klimaanlagen wird üblicherweise die Frischluft mit der Umluft über eine Mischklappe gesteuert in einer Mischkammer gemischt und so mit einem Gebläse in den Fahrzeuginnenraum geblasen. Dieses hat insbesondere den Nachteil, dass die Frischluftzufuhr oft unzureichend genau dosierbar ist und eine steuerbare Klappenanordnung benötigt wird. Die Frischluftzufuhr ist dabei nicht völlig von der Förderung der Umluft entkoppelt, denn je größer der Umluftstrom dabei ist, desto kleiner ist die Frischluftzufuhr und umgekehrt. Eine diesbezügliche Verbesserung zeigt die in DE102009003300A1 offenbarte Belüftungseinrichtung, die ein Umluftgebläse zur Erzeugung eines Umluftstroms bezüglich des Fahrzeuginnenraums und ein davon unabhängig in der Drehzahl regelbares Hilfsgebläse für Frischluft, die dem Umluftstrom beigemischt wird, umfasst. Eine entsprechend ausgebildete Anlage ist in US4467706A offenbart. Dabei lässt sich der Frischluftvolumenstrom und der Luftdruck im Fahrzeuginnenraum wie zum Beispiel im Fahrer- und/oder Fahrgastraum einstellen. Aber dort sind der Frischluftvolumenstrom und der Luftdruck des Fahrzeuginnenraums durch den Grad der Dichtheit des Fahrzeuginnenraums und damit der so je nach Luftdruck festgelegten Abfuhrmenge pro Zeit von Abluft aus dem Fahrzeuginnenraum nachteilig gekoppelt beziehungsweise eingeschränkt. Um dabei einen bestimmten Luftdruck im Fahrzeuginnenraum zu halten, muss der Frischluftvolumenstrom, sofern sich der Grad der Dichtheit des Fahrzeuginnenraums nicht ändert, relativ konstant bleiben. Der Luftaustausch bezüglich des Fahrzeuginnenraums ist dabei im Wesentlichen über dessen Grad an Dichtheit begrenzt. Entsprechend nachteilige Luftbehandlungsanlagen offenbaren die DE102009003300A1 und die US4467706A. Bei den in JPH10-16531A und JP2012-1037A offenbarten Klimaanlagen ist zwar die Abluftfördereinrichtung unabhängig vom Frischluftgebläse und Umluftgebläse regelbar, aber das Frischluftgebläse ist in der Drehzahl mit dem Umluftgebläse gekoppelt, so dass sie für eine Regulieren der Luftströme nachteilig zusätzlich erforderliche Klappenanordnungen aufweisen. In JPS5863509A ist die Klimaanlage für die Kühlung von Umluft im Fahrzeug getrennt von der Belüftungsanlage für die Frischluftzufuhr und Abluftabfuhr, die insbesondere der Einstellung der Luftfeuchtigkeit dient. Es sind also nachteilig zwei getrennte Anlagen, wobei zudem offenbleibt, ob und wie ein Regeln von Umluftgebläse, Frischluftgebläse und Abluftfördereinrichtung erfolgt. In JP2015-51680A ist ein Regeln der Drehzahlen von Umluftgebläse, Frischluftgebläse und Abluftfördereinrichtung offenbart, aber dort ist das Umluftgebläse auch zum Fördern von Frischluft vorgesehen, so dass nachteilig Frischluft und Umluft nur gemeinsam vermischt in den Fahrzeuginnenraum eingeblasen werden. Bei Betrieb des Frischluftgebläses der in JP 2010076506 A offenbarten Heiz- und/oder Klimaanlage sind Frischluft und Umluft vermischt in den Fahrzeuginnenraum einblasbar.

Der im Anspruch 1 angegebenen Erfindung liegt also das Problem zugrunde, eine verbesserte Heiz- und/oder Klimaanlage, wie insbesondere hinsichtlich der Belüftung vor allem bezüglich der Frischluftzufuhr, der Umluft und der Abluft bereitzustellen.

Ein entsprechendes Problem liegt auch der Bereitstellung eines bodengebundenen Fahrzeugs mit einer derartigen Heiz- und/oder Klimaanlage zugrunde.

Ferner liegt der im unabhängigen Verfahrensanspruch angegebenen Erfindung ein entsprechendes Problem zur Steuerung einer derartigen Heiz- und/oder Klimaanlage bei einem bodengebundenen Fahrzeug insbesondere hinsichtlich der Belüftung vor allem bezüglich der Frischluftzufuhr, der Umluft und der Abluft zugrunde.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass die Heiz- und/oder Klimaanlage für ein bodengebundenes Fahrzeug wenigstens ein Umluftgebläse zum Fördern von Umluft bezüglich eines Fahrzeuginnenraums und wenigstens ein Frischluftgebläse zum nur Fördern von Frischluft für einen Fahrzeuginnenraum umfasst, wobei die Heiz- und/oder Klimaanlage zumindest auch eine Abluftfördereinrichtung zum Fördern von Abluft aus einem Fahrzeuginnenraum nach außen in die Umgebung aufweist und die Drehzahlen der Motoren von Umluftgebläse, von Frischluftgebläse und von Abluftfördereinrichtung unabhängig voneinander regelbar sind, und wobei das wenigstens eine Umluftgebläse nur zum Fördern von Umluft vorgesehen ist und die Frischluftzufuhr derart ausgebildet ist, dass die Frischluftleitung von der Umluftleitung getrennt ist, so dass bei Betrieb von dem wenigstens einen Frischluftgebläse Frischluft nur unvermischt, also ohne Beimengung von Umluft, in den Fahrzeuginnenraum einblasbar ist, wird das Problem gelöst.

Die Erfindung hat insbesondere den Vorteil, dass der Luftaustausch bezüglich des Fahrzeuginnenraums im Wesentlichen nicht nur von dessen Dichtheit abhängt, sondern die Abluft auch durch eine Abluftfördereinrichtung wie beispielsweise ein Abluftgebläse aus einem Fahrzeuginnenraum nach außen aktiv abführbar ist. Diese eröffnet eine größere Flexibilität hinsichtlich des Frischluftvolumenstroms durch das Frischluftgebläse und der Einstellung des Luftdrucks im Fahrzeuginnenraum. Der Umluftstrom ist mit dem Umluftgebläse unabhängig oder zumindest relativ unabhängig davon erzeugbar. Mit der zusätzlichen Abluftfördereinrichtung lässt sich der Luftaustausch in einem Fahrzeuginnenraum, wie einem Fahrer- und/oder Fahrgastraum, erhöhen oder auch dort ein bestimmter Luftdruck wie beispielsweise auch ein Unterdruck je nach Einstellung von Frischluftzufuhr durch das Frischluftgebläse und von Abfuhrmenge pro Zeit von Abluft durch die Abluftfördereinrichtung einstellen.

Dadurch dass die Drehzahl der Motoren von Umluftgebläse, von Frischluftgebläse und von Abluftfördereinrichtung unabhängig voneinander regelbar sind, ist eine einfache, effektive und gut regulierbare Möglichkeit eröffnet, die Größen der Volumenströme von Frischluft, Umluft und Abluft unterschiedlich voneinander einzustellen und zu verändern, was die Variationsmöglichkeiten insbesondere hinsichtlich des Luftaustauschs, Luftdrucks und Umluftvolumenstroms bezüglich eines Fahrzeuginnenraums verbessert. Vorteilhaft kann die Frischluft vor ihrem Eintritt in den Fahrzeuginnenraum nicht mit Umluft vermengt werden. Die Frischluftzufuhr ist somit völlig vom Umluftstrom entkoppelt. Frischluftstrom und Umluftstrom lassen sich dadurch unabhängig voneinander einstellen, was die Flexibilität bezüglich der Belüftung eines Fahrzeuginnenraums verbessert.

Als Umluftgebläse, Frischluftgebläse und Abluftfördereinrichtung kommt jeweils eine Luftfördereinrichtung jedweder geeigneter Art wie zum Beispiel Radiallüfter, Doppelradiallüfter, Axiallüfter oder Querstromlüfter in Betracht.

In den Unteransprüchen sind vorteilhafte Ausgestaltungen, Weiterbildungen und Verbesserungen des jeweiligen Gegenstandes der Erfindung angegeben.

Gemäß einer vorteilhaften Ausführung der vorliegenden erfindungsgemäßen Heiz- und/oder Klimaanlage ist/sind die Größe des durchströmbaren Querschnitts hinsichtlich der Frischluftzufuhr zum Frischluftgebläse und/oder die Größe des durchströmbaren Querschnitts hinsichtlich der Umluftzufuhr zum Umluftgebläse und/oder die Größe des durchströmbaren Querschnitts hinsichtlich der Abluftzufuhr zur Abluftfördereinrichtung variierbar. Damit besteht eine weitere Möglichkeit je nach eingestellter Größe des durchströmbaren Querschnitts den Frischluftvolumenstrom, den Umluftvolumenstrom und/oder den Abluftvolumenstrom hinsichtlich eines Fahrzeuginnenraums einzeln einzustellen beziehungsweise zu regeln.

Bevorzugt sind das wenigstens eine Umluftgebläse und das wenigstens eine Frischluftgebläse jeweils als Radiallüfter oder Doppelradiallüfter und die zumindest eine Abluftfördereinrichtung als Axiallüfter oder Radiallüfter oder Doppelradiallüfter ausgebildet. Diese Ausführungen der Luftfördereinrichtungen sind effektiv und in Heiz- und/oder Klimaanlagen gut einsetzbar.

Nach einer vorteilhaften Weiterbildung der vorliegenden erfindungsgemäßen Heiz- und/oder Klimaanlage umfasst sie derart angeordnete Wärmetauscher, dass zumindest einer zum Kühlen und/oder Heizen von Umluft und ein weiterer zum Kühlen und/oder Heizen von Frischluft vorgesehen sind. Dadurch sind Frischluft und Umluft unterschiedlich heizbar und/oder kühlbar. Damit kann der oft größere Temperaturunterschied der Frischluft zur Luft im Fahrzeuginnenraum gezielter ausgeglichen werden. Auch kann die Umluft damit besser auf sie abgestimmt behandelt werden. Die Energieeffizienz ist erhöht.

Gemäß einer vorteilhaften Ausbildung umfasst die erfindungsgemäße Heiz- und/oder Klimaanlage einen Kältemittelkreis mit Verdichter, Kondensator/Gaskühler, Expansionsorgan und Verdampfer, der zwischen Wärmepumpenbetrieb zum Heizen und Klimabetrieb zum Kühlen umschaltbar ausgebildet ist. Dadurch ist der Kältemittelkreis sowohl zum Kühlen als auch zum Heizen einsetzbar, wobei ein und derselbe Wärmetauscher sowohl zum Kühlen der zu behandelnden Luft wie beispielsweise der Frischluft als auch zum Heizen der zu behandelnden Luft einsetzbar ist.

Bevorzugt umfasst die Heiz- und/oder Klimaanlage einen im Abluftstrombereich angeordneten derart ausgebildeten Wärmetauscher, dass mit ihm im Heizbetrieb der Heiz- und/oder Klimaanlage Wärme aus der Abluft und/oder im Klimabetrieb der Heiz- und/oder Klimaanlage Kälte aus der Abluft für den Betrieb der Heiz- und/oder Klimaanlage zurückgewinnbar ist. Dieses dient der Verringerung des Energieverbrauchs der Anlage und erhöht deren Effizienz.

Vorzugsweise umfasst die erfindungsgemäße Heiz- und/oder Klimaanlage eine Steuerung zumindest zum Regeln der Frischluftzufuhr durch das wenigstens eine Frischluftgebläse, des Umluftvolumenstroms durch das wenigstens eine Umluftgebläse und der Abfuhrmenge pro Zeit von Abluft durch die wenigstens eine Abluftfördereinrichtung. Dies kann beispielsweise durch Regeln der Drehzahlen der Motoren von Umluftgebläse, Frischluftgebläse und Abluftfördereinrichtung und/oder durch Einstellung der Größe der des durchströmbaren Querschnitts hinsichtlich der Frischluftzufuhr zum Frischluftgebläse, der Größe des durchströmbaren Querschnitts hinsichtlich der Umluftzufuhr zum Umluftgebläse und/oder der Größe des durchströmbaren Querschnitts hinsichtlich der Abluftzufuhr zur Abluftfördereinrichtung erfolgen. Mit einer derartigen Steuerung ist die Belüftung eines Fahrzeuginnenraums wie dem Fahrer- und/oder Fahrgastraum einschließlich der Frischluftzufuhr, des Umluftvolumenstroms und der Abfuhrmenge pro Zeit von Abluft gezielt steuerbar und einstellbar. Bevorzugt umfasst eine derartige Heiz- und/oder Klimaanlage wenigstens einen Drucksensor eingerichtet zum Erfassen von Luftdruck eines als Fahrerraum und/oder Fahrgastraum ausgebildeten Fahrzeuginnenraums, wobei die Steuerung derart ausgebildet ist, dass mithilfe von ihr der Frischluftvolumenstrom und der Luftdruck für einen als Fahrerraum und/oder Fahrgastraum ausgebildeten Fahrzeuginnenraum automatisch regelbar ist. So kann der Frischluftvolumenstrom anhand des Luftdrucks im Fahrzeuginnenraum und der Drehzahl des Motors des Frischluftgebläses sowie der Größe des durchströmbaren Querschnitts hinsichtlich der Frischluftzufuhr automatisch ermittelt, gesteuert und eingestellt werden. Auch die Zuhilfenahme eines zusätzlichen im Frischluftstrombereich der Anlage angeordneten Strömungssensors ist dafür denkbar. Der Luftdruck lässt sich mit der Steuerung über das Regeln von Frischluftzufuhr und Abfuhrmenge pro Zeit von Abluft des Fahrzeuginnenraums sowie den Daten des Drucksensors automatisch regeln. Dadurch kann automatisch besonders effektiv der Luftdruck und die Frischluftzufuhr eines Fahrer- und/oder Fahrgastraums eines bodengebundenen Fahrzeugs gesteuert werden, wobei wegen der zusätzlichen Regelung der Abluftmenge beides relativ unabhängig voneinander einstellbar ist.

Vorzugsweise umfasst die erfindungsgemäße Heiz- und/oder Klimaanlage wenigstens einen Gassensor, eingerichtet zum Erfassen von CO2-Konzentration in der Abluft und/oder in der Umluft und/oder in einem Fahrzeuginnenraum, wobei die Steuerung derart ausgebildet ist, dass mithilfe von ihr die Konzentration von CO2 in einen als Fahrerraum und/oder Fahrgastraum ausgebildeten Fahrzeuginnenraum unter vorgegebener Obergrenze und/oder über vorgegebener Untergrenze durch Regeln der Frischluftzufuhr und der Abfuhrmenge pro Zeit von Abluft automatisch einstellbar ist. Die CO2-Konzentration ist ein Maß dafür, wie verbraucht die Luft ist. Damit steht vorteilhaft eine gut zu ermittelnde sowie aussagekräftige Größe für das automatische Regeln eines notwendigen Luftaustausches von Luft eines Fahrzeuginnenraums, ohne damit die für die Luftbehandlung energieaufwendige Frischluftzufuhr unnötig groß werden zu lassen, zur Verfügung.

Gemäß einer vorteilhaften Ausgestaltung der erfindungsgemäßen Heiz- und/oder Klimaanlage sind zumindest ihre luftleitenden, ihre luftfördernden und ihre direkt luftbehandelnden Bestandteile in einer zum Positionieren auf oder teilintegriert in einem Fahrzeugdach ausgebildeten Einheit angeordnet. Dieses ist insbesondere für ein größeres langgestrecktes bodengebundenes Fahrzeugen wie zum Beispiel ein Omnibus oder Schienenfahrzeug von Vorteil.

Mit einem bodengebundenen Fahrzeug mit einer erfindungsgemäßen Heiz- und/oder Klimaanlage wird das dem Anspruch 11 zugrundeliegende Problem gelöst. Bezüglich vorteilhafter Ausgestaltungen und Weiterbildungen und deren Vorzüge gelten entsprechend die obigen Angaben zur erfindungsgemäßen Heiz- und/oder Klimaanlage. Vorzugsweise sind Bau- oder Landwirtschaftsfahrzeuge mit einer erfindungsgemäßen Heiz- und/oder Klimaanlage ausgestattet, denn dort sind die Belüftung und der richtige Luftdruck des Fahrerraums also der Fahrerkabine besonders wichtig.

Das Problem bezüglich eines Verfahrens wird durch ein Verfahren zum Steuern einer erfindungsgemäßen Heiz- und/oder Klimaanlage bei einem bodengebundenen Fahrzeug gemäß Anspruch 12 gelöst, wobei die durch das wenigstens eine Frischluftgebläse erfolgende unvermischte Frischluftzufuhr in den Fahrzeuginnenraum geregelt wird und der durch das wenigstens eine Umluftgebläse erfolgende Umluftvolumenstrom bezüglich des Fahrzeuginnenraums geregelt wird sowie die durch die wenigstens eine Abluftfördereinrichtung erfolgende Abfuhrmenge pro Zeit von Abluft aus dem Fahrzeuginnenraum nach außen in die Umgebung geregelt wird. Das Verfahren ist besonders flexibel und erlaubt ein gezieltes Steuern der Frischluftzufuhr in den Fahrzeuginnenraum sowie der Abfuhrmenge pro Zeit von Abluft. Die Abführmenge von Abluft wird so vorteilhaft aktiv gesteuert. Parallel wird unabhängig davon der Umluftstrom geregelt.

Vorzugsweise wird bei dem erfindungsgemäßen Verfahren der Frischluftvolumenstrom und/oder der Luftdruck für den als Fahrerraum und/oder Fahrgastraum ausgebildeten Fahrzeuginnenraum durch Regeln der Frischluftzufuhr und der Abfuhrmenge pro Zeit von Abluft gesteuert und/oder die CO2-Konzentration in dem als Fahrerraum und/oder Fahrgastraum ausgebildeten Fahrzeuginnenraum unter vorgegebener Obergrenze und/oder über vorgegebener Untergrenze durch Erfassen der CO2-Konzentration in der Abluft und/oder in der Umluft und/oder in dem Fahrzeuginnenraum sowie durch Regeln der Frischluftzufuhr und der Abfuhrmenge pro Zeit von Abluft eingestellt. Damit wird ein notwendiger Luftaustausch von Luft des Fahrzeuginnenraums, ohne die für die Luftbehandlung energieaufwendige Frischluftzufuhr unnötig groß werden zu lassen, eingestellt. Der Luftdruck und die Frischluftzufuhr eines Fahrer- und/oder Fahrgastraums eines bodengebundenen Fahrzeugs werden besonders effektiv gesteuert, wobei wegen der zusätzlichen Regelung der Abluftmenge beides weitestgehend unabhängig voneinander einstellbar ist.

### Kurze Beschreibung der Zeichnungen:

Anhand der Zeichnungen werden Ausführungsbeispiele der Erfindung erläutert.

Es zeigen
Fig. 1 einen vertikalen Schnitt durch ein Ausführungsbeispiel einer Heiz- und/oder Klimaanlage;
Fig. 2 einen vertikalen Schnitt durch ein weiteres Ausführungsbeispiel einer Heiz- und/oder Klimaanlage;
Fig. 3 ein bodengebundenes Fahrzeug mit einem Ausführungsbeispiel einer erfindungsgemäßen Heiz- und/oder Klimaanlage; und
Fig. 4 als Flussdiagramm ein Verfahren zum Steuern einer erfindungsgemäßen Heiz- und/oder Klimaanlage bei einem bodengebundenen Fahrzeug.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

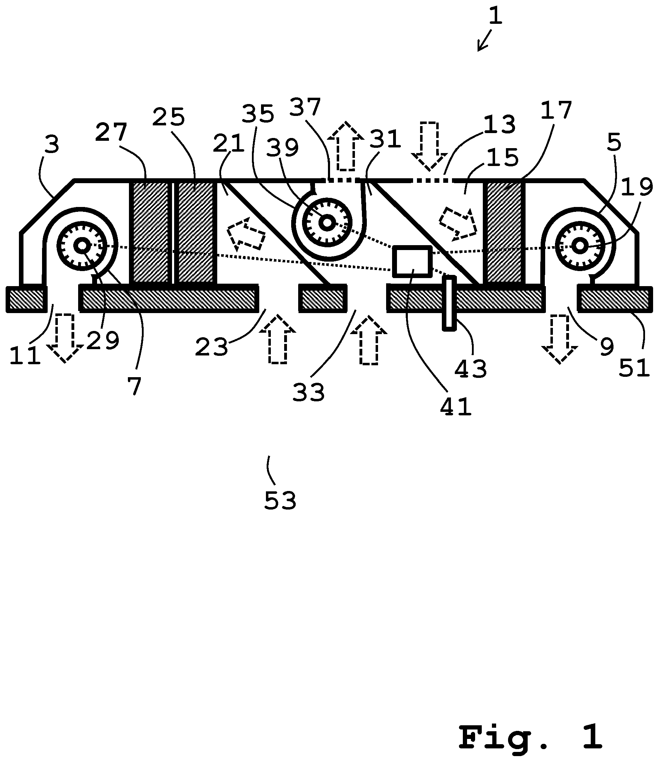

In Figur 1 ist in einem vertikalen Schnitt ein Ausführungsbeispiel einer Heiz- und/oder Klimaanlage 1 gezeigt, die auf einem Fahrzeugdach 51 eines bodengebundenen Fahrzeugs wie zum Beispiel eines Omnibusses montiert ist. Unter dem Gehäusedeckel 3 der Heiz- und/oder Klimaanlage 1 sind jeweils als Radiallüfter ausgebildet auf der rechten Seite ein Frischluftgebläse 5 und auf der linken Seite ein Umluftgebläse 7 mit jeweils Ausblasrichtung nach unten durch Ausblasöffnungen 9 und 11 in den Fahrzeuginnenraum 53, der beispielsweise als Fahrgastraum ausgebildet ist, angeordnet. Es sind auch jeweils Ausführungen von Frischluftgebläse 5 und Umluftgebläse 7 als zum Beispiel Doppelradiallüfter oder Axiallüfter oder Querstromlüfter denkbar. Für vom Frischluftgebläse 5 anzusaugende Frischluft befindet sich eine Einlassöffnung 13 im Gehäusedeckel 3, von der die Frischluftleitung 15 die eingesaugte Frischluft durch den Wärmetauscher 17 zum Frischluftgebläse 5 leitet. Der als Luft-Kältemittel-Wärmetauscher ausgebildete Wärmetauscher 17 ist in einem in Figur 1 nicht gezeigten Kältemittelkreis umschaltbarer einerseits zum Heizen der Frischluft und andererseits zum Kühlen der Frischluft ausgebildet. Denkbar ist auch ein Wärmetauscher 17 zum Wärmeaustausch der Frischluft mit einer Heiz- und/oder Kühlflüssigkeit eines Heiz- und/oder Kühlkreises, der beispielsweise als Sekundärkreis in Wärmetauschverbindung mit einem primären Kältemittelkreis steht. Der als Elektromotor ausgebildete Motor 19 des Frischluftgebläses 5 ist in seiner Drehzahl regelbar. Dadurch ist die Förderleistung des Frischluftgebläses 5 regelbar. Bei Betrieb des Frischluftgebläses 5 wird die dabei von außen geförderte Frischluft nur unvermischt, also ohne Beimengung von Umluft, in den Fahrzeuginnenraum 53 eingeblasen. Die Frischluftleitung 15 ist getrennt von der auf der linken Seite der Heiz- und/oder Klimaanlage 1 angeordneten Umluftleitung 21. Die Umluftleitung 21 dient der Leitung von vom Umluftgebläse 7 angesaugter Umluft aus dem Fahrzeuginnenraum 53 durch die Einlassöffnung 23, den Kühlwärmetauscher 25 und den Heizwärmetauscher 27 zum Umluftgebläse 7. Das Umluftgebläse 7 ist so angeordnet, dass es nur Umluft bezüglich des Fahrzeuginnenraums 53 fördern kann. Die Drehzahl des als Elektromotor ausgebildeten Motors 29 des Umluftgebläses 7 ist regelbar, so dass damit die Größe des durch das Umluftgebläse 7 strömenden Umluftvolumenstroms steuerbar ist. Der zum Kühlen der Umluft dienende Kühlwärmetauscher 25 ist als Verdampfer des in Figur 1 nicht weiter gezeigten Kältemittelkreises ausgebildet. Ebenso einsetzbar wäre ein als Luft-Kühlflüssigkeits-Wärmetauscher ausgebildeter Kühlwärmetauscher 25 eines in Wärmetauschverbindung zum Kältemittelkreis stehenden Kühlkreises. Der zum Heizen der Umluft dienende Heizwärmetauscher 27 ist als elektrisches Heizelement ausgebildet. Denkbar ist aber auch die Ausbildung als ein Luft-Heizflüssigkeits-Wärmetauscher eines Heizkreises oder als Kondensator/Gaskühler des Kältemittelkreises.

Im zentralen Bereich zwischen Umluftleitung 21 und Frischluftleitung 15 ist die Abluftleitung 31 zum Leiten von Abluft aus dem Fahrzeuginnenraum 53 durch die Auslassöffnung 33 zur unter dem Gehäusedeckel 3 angeordneten Abluftfördereinrichtung 35. Die Abluftfördereinrichtung 35 ist als Radiallüfter mit Ausblasöffnung 37 im Gehäusedeckel 3 nach außen ausgebildet. Denkbar ist auch eine Ausführung beispielsweise als Doppelradiallüfter oder Axiallüfter oder Querstromlüfter. Die Abluftfördereinrichtung 35 dient zur Förderung von aus dem Fahrzeuginnenraum 53 angesaugter Abluft nach außen in die Umgebung. Die Drehzahl des als Elektromotor ausgebildeten Motors 39 der Abluftfördereinrichtung 35 ist regelbar, so dass ihre Förderleistung variiert werden kann und damit die durch sie pro Zeit strömende Abfuhrmenge von Abluft steuerbar ist. Die drei Motoren 19, 29 und 39 des Fischluftgebläses 5, des Umluftgebläses 7 und der Abluftfördereinrichtung 35 sind unabhängig voneinander bezüglich ihrer Drehzahl regelbar. Die Steuerung 41 ist ausgebildet zum Regeln der Drehzahlen der drei Motoren 19, 29, 39. Dazu verfügt die Heiz- und/oder Klimaanlage 1 über einen Drucksensor 43 zum Messen des Luftdrucks im Fahrzeuginnenraum 53. Die von der Steuerung 41 vom Drucksensor 43 empfangenen Messdaten sowie die eingestellte Förderleistung des Frischluftgebläses 5 werden von der Steuerung 41 mit den Sollwerten für den Luftdruck im Fahrzeuginnenraum 53 und für den Frischluftvolumenstrom verglichen und bei Abweichung durch entsprechendes Regeln erstens der Drehzahlen des Motors 19 und damit der Frischluftzufuhr durch das Frischluftgebläse 5 und zweitens der Drehzahl des Motors 39 und damit der Abfuhrmenge pro Zeit von Abluft durch die Abluftfördereinrichtung 35 automatisch ausgeglichen. Unabhängig davon ist der Umluftvolumenstrom von der Steuerung 41 durch Regeln der Drehzahl des Motors 29 einstellbar. Die Steuerung 41 verfügt über einen Prozessor.

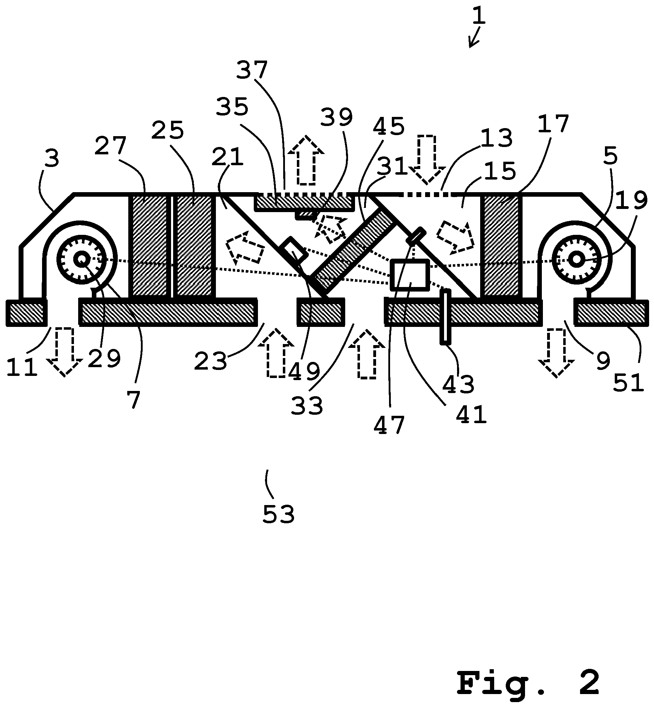

In Figur 2 ist ein vertikaler Schnitt durch ein weiteres Ausführungsbeispiel einer Heiz- und/oder Klimaanlage 1 gezeigt. Die Heiz- und/oder Klimaanlage 1 entspricht bis auf wenige Unterschiede dem in Figur 1 dargestellten Ausführungsbeispiel, so dass dieselben Bezugszeichen für gleiche Bestandteile gelten. Die Heiz- und/oder Klimaanlage 1 ist auf dem Fahrzeugdach 51 eines bodengebundenen Fahrzeugs wie beispielsweise einem Omnibus montiert. Sie umfasst insbesondere ein Umluftgebläse 7 zum nur Fördern von Umluft bezüglich des Fahrzeuginnenraums 53, ein Frischluftgebläse 5 zum nur Fördern von Frischluft in den Fahrzeuginnenraum 53 und auch eine Abluftfördereinrichtung 35 zum Fördern von Abluft aus dem Fahrzeuginnenraum 53 nach außen in die Umgebung, wobei in dieser Ausführung die Abluftfördereinrichtung 35 als Axiallüfter mit dem elektrisch betreibbaren Motor 39 ausgebildet ist. Die drei Motoren 19, 29 und 39 des Fischluftgebläses 5, des Umluftgebläses 7 und der Abluftfördereinrichtung 35 sind in ihrer Drehzahl unabhängig voneinander regelbar.

Im Abluftstrombereich in der Abluftleitung 31 zwischen Auslassöffnung 33 und Abluftfördereinrichtung 35 ist ein zusätzlicher Wärmetauscher 45 angeordnet. Dieser Wärmetauscher 45 dient der Rückgewinnung von Wärme oder Kälte aus der Abluft. Mit ihm wird im Heizbetrieb der Heiz- und/oder Klimaanlage 1 Wärme aus der Abluft und/oder im Klimabetrieb der Heiz- und/oder Klimaanlage 1 Kälte aus der Abluft für den Betrieb der Heiz- und/oder Klimaanlage 1 zurückgewonnen. Er ist ein Luft-Flüssigkeits-Wärmetauscher. Die durch einen Sekundärkreis gepumpt Flüssigkeit, wie beispielsweise Wasser, nimmt im Heizbetrieb dort die Wärme aus der Abluft auf und gibt sie über einen Verdampfer an das Kältemittel, wie beispielsweise CO2, des Primärkreises ab. Der Primärkreis ist ein üblicher Kältemittelkreis mit Verdichter, wenigstens einem Kondensator/Gaskühler, Expansionsorgan und wenigstens einem Verdampfer. Er ist in diesem Beispiel zwischen Wärmepumpenbetrieb zum Heizen und Klimabetrieb zum Kühlen umschaltbar ausgebildet. Im Klimabetrieb nimmt die durch den Sekundärkreis gepumpt Flüssigkeit im Wärmetauscher 45 Kälte aus der Abluft auf und gibt sie über einen Kondensator/Gaskühler an das Kältemittel des Kältemittelkreises ab. Dazu ist jeweils der Sekundärkreis entsprechend mit Ventilen geschaltet. Ferner verfügt die Heiz- und/oder Klimaanlage 1 über einen Strömungssensor 47 in der Frischluftleitung 15 zum Messen der Strömungsgeschwindigkeit der vom Fischluftgebläse 5 angesaugten Frischluft. In der Abluftleitung 31 ist ein Gassensor 49 zum Ermitteln der CO2-Konzentration in der Abluft angeordnet. Denkbar ist auch eine Anordnung in der Umluftleitung 21 oder im Fahrzeuginnenraum 53.

Die Steuerung 41 empfängt die vom Drucksensor 43, vom Strömungssensor 47 und vom Gassensor 49 übermittelten Daten und steuert entsprechend die jeweiligen Drehzahlen der Motoren 19, 29 und 39 des Fischluftgebläses 5, des Umluftgebläses 7 und der Abluftfördereinrichtung 35. Droht die CO2-Konzentration eine vorgegeben Obergrenze von beispielsweise 1400 ppm CO2 in der Abluft zu erreichen, wird automatisch die Frischluftzufuhr und die Abfuhrmenge pro Zeit von Abluft durch Erhöhen der Drehzahl von Frischluftgebläse 5 und Abluftfördereinrichtung 35 vergrößert und damit der Luftaustausch im Fahrzeuginnenraum 53 erhöht. Entsprechend umgekehrt wird der Luftaustausch verringert, wenn die CO2-Konzentration in der Abluft droht auf eine Untergrenze von beispielsweise 750 ppm CO2 in der Abluft abzusinken. Die Daten des Strömungssensors 47 helfen, den Frischluftvolumenstrom zu bestimmen. So lässt sich die Frischluftzufuhr präzise einstellen. Davon unabhängig ist der Umluftvolumenstrom vom Fahrzeuginnenraum 53 durch das Umluftgebläse 7 wieder in den Fahrzeuginnenraum 53 von der Steuerung 41 durch Regeln der Drehzahl des Motors 29 einstellbar.

Denkbar sind auch Ausführungen der Heiz- und/oder Klimaanlage 1, bei denen alternativ oder kumulativ zum Regeln der Drehzahlen der Motoren 19, 29 und 39 die Größe des durchströmbaren Querschnitts hinsichtlich der Frischluftzufuhr zum Frischluftgebläse 5 und die Größe des durchströmbaren Querschnitts hinsichtlich der Umluftzufuhr zum Umluftgebläse 7 sowie die Größe des durchströmbaren Querschnitts hinsichtlich der Abluftzufuhr zur Abluftfördereinrichtung 35 beispielweise durch entsprechende Klappenanordnung variierbar sind.

Gemäß einer Ausführungsform steuert die Steuerung 41 auch die Temperatur der Luft im Fahrzeuginnenraum 53.

Die Steuerung 41, die einen Prozessor umfasst, empfängt die vom im Fahrzeuginnenraum 53 angeordneten Drucksensor 43, von einem Temperatursensor, vom Strömungssensor 47 und vom CO2-Konzentration messenden Gassensor 49 übermittelten Messdaten und regelt anhand von jeweils vorgegebenen Sollwertbereichen für Lufttemperatur, Luftdruck und CO2-Konzentration im Fahrzeuginnenraum 53 automatisch den Verdichter des Kältemittelkreises sowie die Drehzahl der drei Motoren 19, 29 und 39 des Fischluftgebläses 5, des Umluftgebläses 7 und der Abluftfördereinrichtung 35. Dadurch ist automatisch die Frischluftzufuhr, der Umluftvolumenstrom, die Abfuhrmenge pro Zeit von Abluft nach außen, der Luftdruck und die Lufttemperatur bezüglich des Fahrzeuginnenraums 53 einstellbar.

Gestrichelte Pfeile in Figuren 1 und 2 zeigen vorgesehene Luftströmungen.

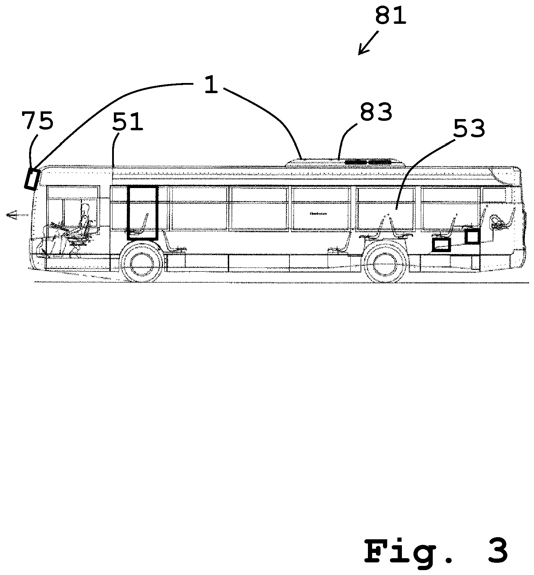

In Figur 3 ist ein bodengebundenes Fahrzeug 81 mit einem Ausführungsbeispiel einer erfindungsgemäßen Heiz- und/oder Klimaanlage 1 dargestellt. Es handelt sich hierbei um einen Omnibus auf dessen Fahrzeugdach 51 eine Einheit 83 der Heiz- und/oder Klimaanlage 1 positioniert ist. Die Einheit 83 enthält insbesondere die luftleitenden, die luftfördernden und die direkt luftbehandelnden Bestandteile der Heiz- und/oder Klimaanlage 1. So sind dort insbesondere das Umluftgebläse zum nur Fördern von Umluft bezüglich des Fahrzeuginnenraums 53 und das Frischluftgebläse zum nur Fördern von Frischluft für den Fahrzeuginnenraum 53 und auch die Abluftfördereinrichtung zum Fördern von Abluft aus dem Fahrzeuginnenraum 53 nach außen in die Umgebung untergebracht, wobei die Frischluftzufuhr derart ausgebildet ist, dass bei Betrieb des Frischluftgebläses Frischluft nur unvermischt, also ohne Beimengung von Umluft, in den Fahrzeuginnenraum 53 einblasbar ist. Auch die Steuerung zum Regeln der Frischluftzufuhr durch das Frischluftgebläse, des Umluftvolumenstroms durch das Umluftgebläse und der Abfuhrmenge pro Zeit von Abluft durch die Abluftfördereinrichtung befindet sich verdeckt in der Einheit 83. Die Heiz- und/oder Klimaanlage 1 ist beispielsweise wie die in Figur 1 oder wie die in Figur 2 gezeigte ausgebildet. Der Außenwärmetauscher 75 des Kältemittelkreises der Heiz- und/oder Klimaanlage 1 ist in diesem Fall ohne darauf beschränkt zu sein außerhalb der Einheit 83 vorne an der Front des bodengebunden Fahrzeugs 81 montiert. Es sind auch Ausführungen denkbar, bei denen die gesamte Heiz- und/oder Klimaanlage 1 als eine Einheit 83 auf oder teilintegriert in dem Fahrzeugdach 51 angeordnet ist. Ferner ist auch eine Heiz- und/oder Klimaanlage 1 mit mehreren Umluftgebläsen, Frischluftgebläsen und Abluftfördereinrichtungen ausführbar, wie beispielsweise auf der einen Fahrzeugseite hintereinander im Wechsel Umluftgebläse und Frischluftgebläse und auf der andern Fahrzeugseite umgekehrt jeweils im Wechsel Frischluftgebläse und Umluftgebläse hintereinander, wobei die Abluftfördereinrichtungen zentral längs hintereinander auf dem Fahrzeugdach 51 angeordnet sind.

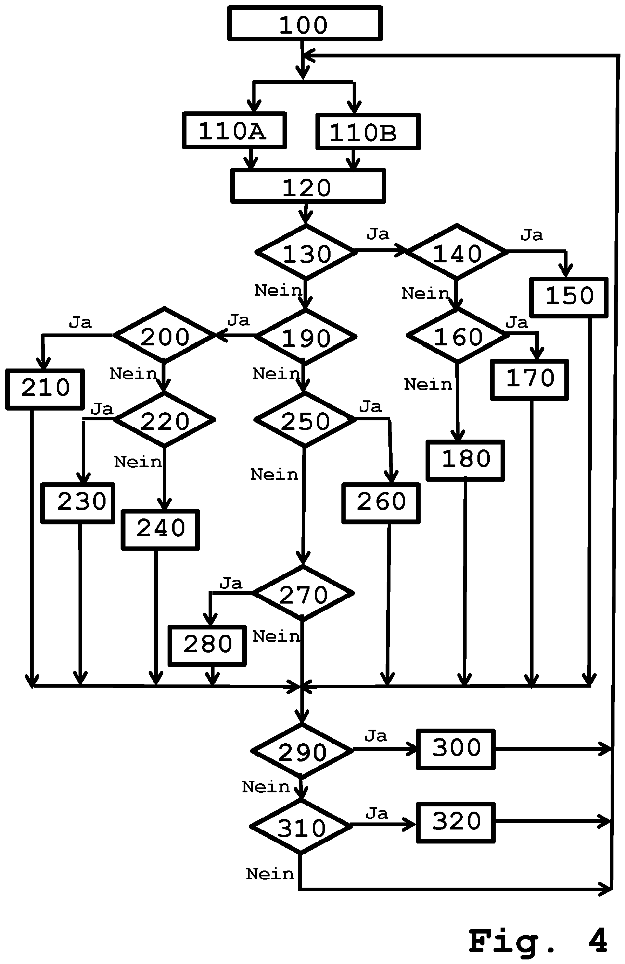

Ein Verfahren zum Steuern einer erfindungsgemäßen Heiz- und/oder Klimaanlage bei einem bodengebundenen Fahrzeug ist als Flussdiagramm in Figur 4 dargestellt.

Das Verfahren bezieht sich insbesondere auf das automatische Steuern der Belüftung des Fahrzeuginnenraums durch die Steuerung. Das zusätzlich erfolgende Steuern der Lufttemperatur und Luftfeuchtigkeit des Fahrzeuginnenraums wird nicht näher beschrieben.

Das Verfahren läuft nur bei geschlossenen Türen des als Fahrerraum und/oder Fahrgastraum ausgebildeten Fahrzeuginnenraums. Im ersten Schritt 100 werden die durch das Frischluftgebläse erfolgende Frischluftzufuhr in den Fahrzeuginnenraum, der durch das wenigstens eine Umluftgebläse erfolgende Umluftvolumenstrom bezüglich des Fahrzeuginnenraums und die durch die wenigstens eine Abluftfördereinrichtung erfolgende Abfuhrmenge pro Zeit von Abluft aus dem Fahrzeuginnenraum nach außen in die Umgebung durch entsprechende Einstellung der Drehzahlen der Motoren von Umluftgebläse, Frischluftgebläse und Abluftfördereinrichtung auf vorgegebene Startwerte eingestellt. Weil die Drehzahlen der Motoren den der jeweiligen damit angetriebenen Rotoren entsprechen, werden beim Regeln der Drehzahlen der Motoren unmittelbar die Drehzahlen von Umluftgebläse, Frischluftgebläse und Abluftfördereinrichtung geregelt. In den nächsten parallel ablaufenden Schritten 110A und 110B werden der Luftdruck und die CO2-Konzentration der Luft im Fahrzeuginnenraum mithilfe eines Drucksensors und eines Gassensors gemessen und die gemessenen Daten an die Steuerung übermittelt. Die Messung der CO2-Konzentration des Fahrzeuginnenraums kann auch mit dem Gassensor in der Abluft und/oder in der Umluft erfolgen. Im folgenden Schritt 120 werden die von der Steuerung empfangen Messdaten mit jeweils einem vorgegebenen Sollwertbereich für einmal Luftdruck, zum Beispiel zwischen 70 Pa und 90 Pa über dem Außenluftdruck, und für einmal CO2-Konzentration, zum Beispiel zwischen 800 ppm bis 1500 ppm CO2 der Luft, verglichen. Die Bereiche haben also jeweils Ober- und Untergrenzen. Darauf erfolgen je nach Ergebnis des Vergleichs weitere Prüfungs-, Entscheidungs- und Regelungsschritte. Im Schritt 130 wird geprüft und entschieden, ob die Obergrenze der CO2-Konzentration erreicht bzw. überschritten ist. Falls "Ja" wird in Schritt 140 weiter geprüft und entschieden, ob die Obergrenze des Luftdrucks überschritten ist. Falls "Ja" wird in Schritt 150 die Drehzahl des Frischluftgebläses leicht und die der Abluftfördereinrichtung stärker erhöht. Falls das Ergebnis in Schritt 140 "Nein" ist, wird in Schritt 160 geprüft und entschieden, ob die Untergrenze des Luftdrucks unterschritten ist. Falls "Ja" wird in Schritt 170 die Drehzahl der Abluftfördereinrichtung leicht und die des Frischluftgebläses stärker erhöht. Falls "Nein" werden im Schritt 180 die Drehzahlen der Abluftfördereinrichtung und des Frischluftgebläses gleichermaßen leicht erhöht.

Falls das Ergebnis in Schritt 130 "Nein" ist, also die CO2-Konzentration unter der Obergrenze liegt, wird in Schritt 190 geprüft und entschieden, ob die Untergrenze der CO2-Konzentration erreicht bzw. unterschritten ist. Falls "Ja" wird in Schritt 200 weiter geprüft und entschieden, ob die Obergrenze des Luftdrucks überschritten ist. Falls "Ja" wird in Schritt 210 die Drehzahl der Abluftfördereinrichtung leicht und die des Frischluftgebläses stärker verringert. Falls jedoch das Ergebnis in Schritt 200 "Nein" ist, wird im Schritt 220 weiter geprüft, ob die Untergrenze des Luftdrucks unterschritten ist. Falls "Ja" wird in Schritt 230 die Drehzahl des Frischluftgebläses leicht und die der Abluftfördereinrichtung stärker verringert. Falls "Nein" werden in Schritt 240 die Drehzahlen der Abluftfördereinrichtung und des Frischluftgebläses gleichermaßen leicht verringert.

Ist jedoch das Ergebnis in Schritt 190 "Nein", also die CO2-Konzentration im vorgegeben Sollwertbereich liegt, wird in Schritt 250 geprüft und entschieden, ob die Obergrenze des Luftdrucks überschritten ist. Falls "Ja" wird in Schritt 260 nur die Drehzahl der Ablufteinrichtung erhöht. Falls jedoch "Nein" wird in Schritt 270 geprüft und entschieden, ob die Untergrenze des Luftdrucks unterschritten ist. Falls "Ja" wird in Schritt 280 nur die Drehzahl der Ablufteinrichtung verringert. Falls jedoch "Nein", also wenn sowohl der Luftdruck als auch die CO2-Konzentration im Fahrzeuginnenraum in den jeweils vorgegebenen Sollwertbereichen liegen, erfolgt keine Änderung der Drehzahlen des Frischluftgebläses und der Abluftfördereinrichtung. Damit ist für den Verfahrensdurchlauf das Regeln der durch das Frischluftgebläse erfolgenden Frischluftzufuhr in den Fahrzeuginnenraum und der durch die Abluftfördereinrichtung erfolgenden Abfuhrmenge pro Zeit von Abluft aus dem Fahrzeuginnenraum nach außen in die Umgebung abgeschlossen. Im nächsten Schritt 290 wird dann weiter geprüft und entschieden, ob der Umluftvolumenstrom durch das Umluftgebläse über einer vorgegeben Obergrenze liegt. Falls "Ja" wird in Schritt 300 die Drehzahl des Umluftgebläses verringert. Falls "Nein" wird in Schritt 310 weiter geprüft und entschieden, ob der Umluftvolumenstrom durch das Umluftgebläse unter einer vorgegeben Untergrenze liegt. Falls "Ja" wird in Schritt 320 die Drehzahl des Umluftgebläses erhöht. Falls "Nein", also wenn der Umluftvolumenstrom im vorgegebenen Größenbereich liegt, bleibt die Drehzahl des Umluftgebläses unverändert.

Nach einer bestimmten Wartezeit von beispielsweise einer Sekunde beginnt das Verfahren beginnend mit den parallel ablaufenden Schritten 110A und 110B erneut durchzulaufen.

## Patentansprüche

1. Heiz- und/oder Klimaanlage (1) für ein bodengebundenes Fahrzeug (81) umfassend wenigstens ein Umluftgebläse (7) zum Fördern von Umluft bezüglich eines Fahrzeuginnenraums (53) und wenigstens ein Frischluftgebläse (5) zum nur Fördern von Frischluft für einen Fahrzeuginnenraum (53), wobei die Heiz- und/oder Klimaanlage (1) zumindest auch eine Abluftfördereinrichtung (35) zum Fördern von Abluft aus einem Fahrzeuginnenraum (53) nach außen in die Umgebung aufweist und die Drehzahlen der Motoren (19, 29, 39) von Umluftgebläse (7), von Frischluftgebläse (5) und von Abluftfördereinrichtung (35) unabhängig voneinander regelbar sind,
**dadurch gekennzeichnet, dass**
das wenigstens eine Umluftgebläse (7) nur zum Fördern von Umluft vorgesehen ist und die Frischluftzufuhr derart ausgebildet ist, dass die Frischluftleitung (15) von der Umluftleitung (21) getrennt ist, so dass bei Betrieb von dem wenigstens einen Frischluftgebläse (5) Frischluft nur unvermischt, also ohne Beimengung von Umluft, in den Fahrzeuginnenraum (53) einblasbar ist.

2. Heiz- und/oder Klimaanlage (1) nach Anspruch 1 **dadurch gekennzeichnet, dass** sie derart ausgebildet ist, dass die Größe des durchströmbaren Querschnitts hinsichtlich der Frischluftzufuhr zum Frischluftgebläse (5) und/oder die Größe des durchströmbaren Querschnitts hinsichtlich der Umluftzufuhr zum Umluftgebläse (7) und/oder die Größe des durchströmbaren Querschnitts hinsichtlich der Abluftzufuhr zur Abluftfördereinrichtung (35) variierbar ist/sind.

3. Heiz- und/oder Klimaanlage (1) nach Anspruch 1 oder 2 **dadurch gekennzeichnet, dass** das wenigstens eine Umluftgebläse (7) und das wenigstens eine Frischluftgebläse (5) jeweils als Radiallüfter oder Doppelradiallüfter und die zumindest eine Abluftfördereinrichtung (35) als Axiallüfter oder Radiallüfter oder Doppelradiallüfter ausgebildet sind.

4. Heiz- und/oder Klimaanlage (1) nach einem der Ansprüche 1 bis 3 **dadurch gekennzeichnet, dass** sie derart angeordnete Wärmetauscher (17, 25, 27) umfasst, dass zumindest einer (25, 27) zum Kühlen und/oder Heizen von Umluft und ein weiterer (17) zum Kühlen und/oder Heizen von Frischluft vorgesehen ist.

5. Heiz- und/oder Klimaanlage (1) nach einem der Ansprüche 1 bis 4 **dadurch gekennzeichnet, dass** sie einen Kältemittelkreis mit Verdichter, Kondensator/Gaskühler, Expansionsorgan und Verdampfer umfasst, der zwischen Wärmepumpenbetrieb zum Heizen und Klimabetrieb zum Kühlen umschaltbar ausgebildet ist.

6. Heiz- und/oder Klimaanlage (1) nach einem der Ansprüche 1 bis 5 **dadurch gekennzeichnet, dass** sie einen im Abluftstrombereich angeordneten derart ausgebildeten Wärmetauscher (45) umfasst, dass mit ihm im Heizbetrieb der Heiz- und/oder Klimaanlage (1) Wärme aus der Abluft und/oder im Klimabetrieb der Heiz- und/oder Klimaanlage (1) Kälte aus der Abluft für den Betrieb der Heiz- und/oder Klimaanlage (1) zurückgewinnbar ist.

7. Heiz- und/oder Klimaanlage (1) nach einem der Ansprüche 1 bis 6 **dadurch gekennzeichnet, dass** sie eine Steuerung (41) zumindest zum Regeln der Frischluftzufuhr durch das wenigstens eine Frischluftgebläse (5), des Umluftvolumenstroms durch das wenigstens eine Umluftgebläse (7) und der Abfuhrmenge pro Zeit von Abluft durch die wenigstens eine Abluftfördereinrichtung (35) umfasst.

8. Heiz- und/oder Klimaanlage (1) nach Anspruch 7 **dadurch gekennzeichnet, dass** sie wenigstens einen Drucksensor (43) eingerichtet zum Erfassen von Luftdruck eines als Fahrerraum und/oder Fahrgastraum ausgebildeten Fahrzeuginnenraums (53) umfasst, wobei die Steuerung (41) derart ausgebildet ist, dass mithilfe von ihr der Frischluftvolumenstrom und der Luftdruck für einen als Fahrerraum und/oder Fahrgastraum ausgebildeten Fahrzeuginnenraum (53) automatisch regelbar ist.

9. Heiz- und/oder Klimaanlage (1) nach Anspruch 7 oder 8 **dadurch gekennzeichnet, dass** sie wenigstens einen Gassensor (49), eingerichtet zum Erfassen von CO2-Konzentration in der Abluft und/oder in der Umluft und/oder in einem Fahrzeuginnenraum (53) umfasst, wobei die Steuerung (41) derart ausgebildet ist, dass mithilfe von ihr die Konzentration von CO2 in einen als Fahrerraum und/oder Fahrgastraum ausgebildeten Fahrzeuginnenraum (53) unter vorgegebener Obergrenze und/oder über vorgegebener Untergrenze durch Regeln der Frischluftzufuhr und der Abfuhrmenge pro Zeit von Abluft automatisch einstellbar ist.

10. Heiz- und/oder Klimaanlage (1) nach einem der Ansprüche 1 bis 9 **dadurch gekennzeichnet, dass** zumindest ihre luftleitenden, ihre luftfördernden und ihre direkt luftbehandelnden Bestandteile in einer zum Positionieren auf oder teilintegriert in einem Fahrzeugdach (51) ausgebildeten Einheit (83) angeordnet sind.

11. Bodengebundenes Fahrzeug (81), wie vorzugsweise ein Bau- oder Landwirtschaftsfahrzeug, mit einer Heiz- und/oder Klimaanlage (1) nach einem der Ansprüche 1 bis 10.

12. Verfahren zum Steuern einer Heiz- und/oder Klimaanlage (1) nach einem der Ansprüche 1 bis 10 bei einem Fahrzeug (81) nach Anspruch 11 **dadurch gekennzeichnet,**
- **dass** die durch das wenigstens eine Frischluftgebläse (5) erfolgende unvermischte Frischluftzufuhr in den Fahrzeuginnenraum (53) geregelt wird,
- **dass** der durch das wenigstens eine Umluftgebläse (7) erfolgende Umluftvolumenstrom bezüglich des Fahrzeuginnenraums (53) geregelt wird, und
- **dass** die durch die wenigstens eine Abluftfördereinrichtung (35) erfolgende Abfuhrmenge pro Zeit von Abluft aus dem Fahrzeuginnenraum (53) nach außen in die Umgebung geregelt wird.

13. Verfahren nach Anspruch 12, **dadurch gekennzeichnet, dass** der Frischluftvolumenstrom und/oder der Luftdruck für den als Fahrerraum und/oder Fahrgastraum ausgebildeten Fahrzeuginnenraum (53) durch Regeln der Frischluftzufuhr und der Abfuhrmenge pro Zeit von Abluft gesteuert wird und/oder die CO2-Konzentration in dem als Fahrerraum und/oder Fahrgastraum ausgebildeten Fahrzeuginnenraum (53) unter vorgegebener Obergrenze und/oder über vorgegebener Untergrenze durch Erfassen der
CO2-Konzentration in der Abluft und/oder in der Umluft und/oder in dem Fahrzeuginnenraum (53) sowie durch Regeln der Frischluftzufuhr und der Abfuhrmenge pro Zeit von Abluft eingestellt wird.

## Claims

1. Heating and/or air-conditioning system (1) for a ground-based vehicle (81), comprising at least one circulation-air blower (7) for conveying circulation air in relation to a vehicle interior (53), and at least one fresh-air blower (5) for only conveying fresh air for a vehicle interior (53), wherein the heating and/or air-conditioning system (1) has at least also an exhaust-air-conveying device (35) for conveying exhaust air from a vehicle interior (53) out into the environment, and the rotational speeds of the motors (19, 29, 39) of circulation-air blower (7), of fresh-air blower (5) and of exhaust-air-conveying device (35) are regulable independently of one another,
**characterized in that**
the at least one circulation-air blower (7) is intended only for conveying circulation air, and the supply of fresh air is configured in such a way that the fresh-air line (15) is separated from the circulation-air line (21), so that, when the at least one fresh-air blower (5) is operating, fresh air is able to be blown into the vehicle interior (53) only in an unmixed state, that is to say without admixture of circulation air.

2. Heating and/or air-conditioning system (1) according to Claim 1, **characterized in that** it is designed in such a way that the size of the through-flowable cross section with regard to the supply of fresh air to the fresh-air blower (5) and/or the size of the through-flowable cross section with regard to the supply of circulation air to the circulation-air blower (7) and/or the size of the through-flowable cross section with regard to the supply of exhaust air to the exhaust-air-conveying device (35) are/is variable.

3. Heating and/or air-conditioning system (1) according to Claim 1 or 2, **characterized in that** the at least one circulation-air blower (7) and the at least one fresh-air blower (5) are each in the form of a radial fan or a double radial fan and the at least one exhaust-air-conveying device (35) is in the form of an axial fan or a radial fan or a double radial fan.

4. Heating and/or air-conditioning system (1) according to one of Claims 1 to 3, **characterized in that** it comprises heat exchangers (17, 25, 27) which are arranged in such a way that at least one heat exchanger (25, 27) is intended for cooling and/or heating circulation air and a further heat exchanger (17) is intended for cooling and/or heating fresh air.

5. Heating and/or air-conditioning system (1) according to one of Claims 1 to 4, **characterized in that** it comprises a refrigerant circuit with compressor, condenser/gas cooler, expansion element and evaporator that is designed to be switchable between heat-pump operation for heating and air-conditioning operation for cooling.

6. Heating and/or air-conditioning system (1) according to one of Claims 1 to 5, **characterized in that** it comprises a heat exchanger (45) arranged in the exhaust-air-stream region, which heat exchanger is designed in such a way that, by way thereof, during the heating operation of the heating and/or air-conditioning system (1), heat is recoverable from the exhaust air, and/or, during the air-conditioning operation of the heating and/or air-conditioning system (1), cold is recoverable from the exhaust air, for the operation of the heating and/or air-conditioning system (1) .

7. Heating and/or air-conditioning system (1) according to one of Claims 1 to 6, **characterized in that** it comprises a controller (41) at least for regulating the supply of fresh air through the at least one fresh-air blower (5), the circulation-air volume flow through the at least one circulation-air blower (7) and the quantity per unit of time of exhaust air removed through the at least one exhaust-air-conveying device (35).

8. Heating and/or air-conditioning system (1) according to Claim 7, **characterized in that** it comprises at least one pressure sensor (43) configured for detecting air pressure of a vehicle interior (53) in the form of a driver's compartment and/or passenger compartment, wherein the controller (41) is designed in such a way that, with the aid thereof, the fresh-air volume flow and the air pressure for a vehicle interior (53) in the form of a driver's compartment and/or passenger compartment are automatically regulable.

9. Heating and/or air-conditioning system (1) according to Claim 7 or 8, **characterized in that** it comprises at least one gas sensor (49) configured for detecting the CO2 concentration in the exhaust air and/or in the circulation air and/or in a vehicle interior (53), wherein the controller (41) is designed in such a way that, with the aid thereof, the concentration of CO2 in a vehicle interior (53) in the form of a driver's compartment and/or passenger compartment is automatically settable below a predefined upper limit and/or above a predefined lower limit by way of regulation of the supply of fresh air and the quantity per unit of time of exhaust air removed.

10. Heating and/or air-conditioning system (1) according to one of Claims 1 to 9, **characterized in that** at least its air-guiding, its air-conveying and its directly air-handling constituent parts are arranged in a unit (83) which is designed to be positioned on or partially integrated in a vehicle roof (51) .

11. Ground-based vehicle (81), such as preferably a construction vehicle or agricultural vehicle, having a heating and/or air-conditioning system (1) according to one of Claims 1 to 10.

12. Method for controlling a heating and/or air-conditioning system (1) according to one of Claims 1 to 10 in the case of a vehicle (81) according to Claim 11, **characterized**
- **in that** the supply of unmixed fresh air into the vehicle interior (53) that is realized by way of the at least one fresh-air blower (5) is regulated,
- **in that** the circulation-air volume flow in relation to the vehicle interior (53) that is realized by way of the at least one circulation-air blower (7) is regulated,
- **in that** the quantity per unit of time of exhaust air removed from the vehicle interior (53) out into the environment that is realized by way of the at least one exhaust-air-conveying device (35) is regulated.

13. Method according to Claim 12, **characterized in that** the fresh-air volume flow and/or the air pressure for the vehicle interior (53) in the form of a driver's compartment and/or passenger compartment are/is controlled by way of regulation of the supply of fresh air and the quantity per unit of time of exhaust air removed, and/or the CO2 concentration in the vehicle interior (53) in the form of a driver's compartment and/or passenger compartment is set below a predefined upper limit and/or above a predefined lower limit by way of detection of the CO2 concentration in the exhaust air and/or in the circulation air and/or in the vehicle interior (53) and by way of regulation of the supply of fresh air and the quantity per unit of time of exhaust air removed.

## Revendications

1. Installation de chauffage et/ou de climatisation (1) pour un véhicule terrestre (81), comprenant au moins un ventilateur de recirculation (7) pour transporter de l'air recyclé par rapport à un espace intérieur de véhicule (53) et au moins un ventilateur d'air frais (5) pour transporter uniquement de l'air frais pour un espace intérieur de véhicule (53), dans laquelle l'installation de chauffage et/ou de climatisation (1) présente au moins aussi un dispositif de transport d'air extrait (35) pour transporter l'air extrait d'un espace intérieur de véhicule (53) vers l'extérieur dans l'environnement, et les vitesses de rotation des moteurs (19, 29, 39) du ventilateur de recirculation (7), du ventilateur d'air frais (5) et du dispositif de transport d'air extrait (35) sont réglables indépendamment les unes des autres,
**caractérisée en ce que** ledit au moins un ventilateur de recirculation (7) n'est prévu que pour transporter de l'air recyclé, et l'apport d'air frais est réalisé de telle sorte que le conduit d'air frais (15) est séparé du conduit d'air recyclé (21) de sorte qu'en cours de fonctionnement du au moins un ventilateur d'air frais (5), l'air frais ne peut être injecté dans l'espace intérieur de véhicule (53) que de manière non mélangée, c'est-à-dire sans addition d'air recyclé.

2. Installation de chauffage et/ou de climatisation (1) selon la revendication 1, **caractérisée en ce qu'**elle est réalisée de telle sorte que la dimension de la section transversale de passage est variable en ce qui concerne l'apport d'air frais au ventilateur d'air frais (5) et/ou la dimension de la section transversale de passage est variable en ce qui concerne l'apport en air recyclé au ventilateur de recirculation (7) et/ou la dimension de la section transversale de passage est variable en ce qui concerne l'apport d'air extrait au dispositif de transport d'air extrait (35).

3. Installation de chauffage et/ou de climatisation (1) selon la revendication 1 ou 2, **caractérisée en ce que** ledit au moins un ventilateur de recirculation (7) et ledit au moins un ventilateur d'air frais (5) sont respectivement réalisés sous forme de ventilateurs radiaux ou de ventilateurs radiaux doubles, et ledit au moins un dispositif de transport d'air extrait (35) est réalisé sous forme de ventilateur axial ou de ventilateur radial ou de ventilateur radial double.

4. Installation de chauffage et/ou de climatisation (1) selon l'une quelconque des revendications 1 à 3, **caractérisée en ce qu'**il comprend des échangeurs thermiques (17, 25, 27) disposés de telle sorte qu'au moins l'un (25, 27) est prévu pour refroidir et/ou chauffer l'air recyclé et un autre (17) est prévu pour refroidir et/ou chauffer l'air frais.

5. Installation de chauffage et/ou de climatisation (1) selon l'une quelconque des revendications 1 à 4, **caractérisée en ce que** qu'il comprend un circuit de réfrigérant pourvu d'un compresseur, d'un condensateur/ refroidisseur de gaz, d'un organe d'expansion et d'un évaporateur, qui est réalisé de manière à pouvoir commuter entre un fonctionnement de pompe à chaleur pour le chauffage et un fonctionnement de climatiseur pour le refroidissement.

6. Installation de chauffage et/ou de climatisation (1) selon l'une quelconque des revendications 1 à 5, **caractérisée en ce qu'**elle comprend un échangeur thermique (45) disposé dans la zone d'écoulement d'air extrait et réalisé de telle sorte qu'il permet à l'installation de chauffage et/ou de climatisation (1) en fonctionnement de chauffage de récupérer de la chaleur de l'air extrait, et/ou qu'il permet à l'installation de chauffage et/ou de climatisation (1) en fonctionnement de climatisation de récupérer du froid de l'air extrait pour le fonctionnement de l'installation de chauffage et/ou de climatisation (1).

7. Installation de chauffage et/ou de climatisation (1) selon l'une quelconque des revendications 1 à 6, **caractérisée en ce qu'**elle comprend un dispositif de commande (41) au moins pour réguler l'apport d'air frais à travers ledit au moins un ventilateur d'air frais (5), le débit volumique d'air recyclé à travers ledit au moins un ventilateur de recirculation (7) et la quantité extraite par unité de temps de l'air extrait par ledit au moins un dispositif de transport d'air extrait (35).

8. Installation de chauffage et/ou de climatisation (1) selon la revendication 7, **caractérisée en ce qu'**elle comprend au moins un capteur de pression (43) qui est conçu pour détecter la pression atmosphérique d'un espace intérieur de véhicule (53) réalisé sous forme de cabine de conducteur et/ou d'habitacle, dans laquelle le dispositif de commande (41) est réalisé de telle sorte qu'il permet de réguler automatiquement le débit volumique d'air frais et la pression atmosphérique pour un espace intérieur de véhicule (53) réalisé sous forme de cabine de conducteur et/ou d'habitacle.

9. Installation de chauffage et/ou de climatisation (1) selon la revendication 7 ou 8, **caractérisée en ce qu'**elle comprend au moins un capteur de gaz (49) conçu pour détecter une concentration de CO₂ dans l'air extrait et/ou dans l'air recyclé et/ou dans un espace intérieur de véhicule (53),
dans laquelle le dispositif de commande (41) est réalisé de telle sorte qu'il permet de régler automatiquement la concentration de CO₂ dans un espace intérieur de véhicule (53) réalisé sous forme de cabine de conducteur et/ou d'habitacle au-dessous d'une limite supérieure spécifiée et/ou au-dessus d'une limite inférieure spécifiée en régulant l'apport d'air frais et la quantité extraite par unité de temps de l'air extrait.

10. Installation de chauffage et/ou de climatisation (1) selon l'une quelconque des revendications 1 à 9, **caractérisée en ce qu'**au moins ses composants de conduction d'air, de transport d'air et de traitement direct de l'air sont disposés dans une unité (83) réalisée pour être positionnée sur ou partiellement intégrée dans un toit de véhicule (51).

11. Véhicule terrestre (81), comme de préférence un engin de construction ou un véhicule agricole, comprenant une installation de chauffage et/ou de climatisation (1) selon l'une quelconque des revendications 1 à 10.

12. Procédé permettant de commander une installation de chauffage et/ou de climatisation (1) selon l'une quelconque des revendications 1 à 10 sur un véhicule (81) selon la revendication 11, **caractérisé en ce que**
- l'apport d'air frais non mélangé dans l'espace intérieur de véhicule (53), effectué par un ventilateur d'air frais (5), est régulé,
- le débit volumique d'air recyclé effectué par ledit au moins un ventilateur de recirculation (7) est régulé par rapport à l'espace intérieur de véhicule (53), et
- la quantité extraite par unité de temps de l'air extrait de l'espace intérieur de véhicule (53) à l'extérieur dans l'environnement, effectuée par ledit au moins un dispositif de transport d'air extrait (35), est régulée.

13. Procédé selon la revendication 12, **caractérisé en ce que** le débit volumique d'air frais et/ou la pression atmosphérique pour l'espace intérieur de véhicule (53) réalisé sous forme de cabine de conducteur et/ou d'habitacle sont commandés en régulant l'apport d'air frais et la quantité extraite par unité de temps de l'air extrait, et/ou la concentration de CO₂ dans l'espace intérieur de véhicule (53) réalisé sous forme de cabine de conducteur et/ou d'habitacle est réglée au-dessous d'une limite supérieure spécifiée et/ou au-dessus d'une limite inférieure spécifiée en détectant la concentration de CO₂ dans l'air extrait et/ou dans l'air recyclé et/ou dans l'espace intérieur de véhicule (53) ainsi qu'en régulant l'apport d'air frais et la quantité extraite par unité de temps de l'air extrait.
